**Europäisches Patentamt**

**European Patent Office**

**Office européen des brevets**

(19)

(11) Veröffentlichungsnummer: **0 032 579**
**B1**

# (12) EUROPÄISCHE PATENTSCHRIFT

(45) Veröffentlichungstag der Patentschrift:
21.09.83

(21) Anmeldenummer: **80108126.6**

(22) Anmeldetag: **22.12.80**

(51) Int. Cl.³: **H 04 J 3/16**

(54) **Verfahren zur Belegung von Zeitschlitzen eines Zeitmultiplexsystems mit dynamischen Multiplexern.**

(30) Priorität: **16.01.80 DE 3001417**

(43) Veröffentlichungstag der Anmeldung:
**29.07.81 Patentblatt 81/30**

(45) Bekanntmachung des Hinweises auf die Patenterteilung:
**21.09.83 Patentblatt 83/38**

(84) Benannte Vertragsstaaten:
**AT BE CH GB IT LI NL SE**

(56) Entgegenhaltungen:
**US-A-3 700 820**
**US-A-3 982 074**

(73) Patentinhaber: **SIEMENS AKTIENGESELLSCHAFT,**
**Berlin und München Wittelsbacherplatz 2,**
**D-8000 München 2 (DE)**

(72) Erfinder: **Finck, Herbert, Dipl.-Ing., Stobäusstrasse 18,**
**D-8190 Wolfratshausen (DE)**
Erfinder: **Reisinger, Konrad, Dipl.-Ing.,**
**Bahnwiesenstrasse 5, D-8011 Zorneding (DE)**

ACTORUM AG

## Verfahren zur Belegung von Zeitschlitzen eines Zeitmultiplexsystems mit dynamischen Multiplexern

Die Erfindung bezieht sich auf ein Verfahren zur Belegung von Zeitschlitzen eines Zeitmultiplexsystems mit dynamischen Multiplexern, das den Anschluss von Datenkanälen in beiden Richtungen ermöglicht, wonach $2^m \cdot n$ Zeitschlitzen des Zeitmultiplexrahmens der Reihe nach die Zahlen 0 bis $-1 + 2^m \cdot n$ zugeordnet werden können, wonach Gruppen der Ordnung i von $2^i$ Zeitschlitzen pro Zeitmultiplexrahmen mit Daten unterschiedlicher Bitrate belegt werden und die den Zeitschlitzen einer Gruppe zugeordneten Zahlen sich um Vielfache von n unterscheiden, wobei i = 0 oder gleich einer positiven ganzen Zahl ist und wobei folgende Verfahrensschritte ausgeführt werden:

A. Vor Belegung von Zeitschlitzen wird in Abhängigkeit von der gerade vorliegenden Bitrate der zu übertragenden Daten die Ordnung i der benötigten Gruppe von Zeitschlitzen ermittelt.

B. Zur Ermittlung freier Zeitschlitze werden in festgelegter Reihenfolge die Zeitschlitzgruppen der Ordnung i innerhalb einer Zeitschlitzgruppe der Ordnung m überprüft, bis eine freie Zeitschlitzgruppe der Ordnung i gefunden ist.

Dynamische Zeitmultiplexübertragungssysteme teilen nur den Dateneinrichtungen, die aktiv sind, Bandbreite in der Zeitmultiplexstrecke zu. Sie nutzen deshalb die Gesamtbandbreite der Zeitmultiplexstrecke besser aus als Zeitmultiplexübertragungssysteme mit fester Zuordnung der Bandbreite. Im allgemeinen gliedert sich dabei das Zeitmultiplexsignal in weniger Zeitschlitze als Datenkanäle an die dynamischen Multiplexer angeschlossen sind. Derartige dynamische Multiplexer werden gelegentlich auch als statistische Multiplexer bezeichnet. Innerhalb der einzelnen Zeitschlitze können entweder jeweils ein einziges Bit oder Wörter mit mehreren Bits, beispielsweise in form von Envelopes, übertragen werden.

Ein Verfahren der eingangs genannten Art ist im Zusammenhang mit einer automatischen Kanalzuteilungsschaltung bekannt (US-A-3 982 074), die in Verbindung mit einer asynchronen oder synchronen digitalen Zeitmultiplexanordnung verwendet wird, um den einzelnen zu übertragenden Signalen Kanäle zuzuteilen, und zwar unabhängig von der Anzahl der verschiedenen Bitraten, mit der die verschiedenen Signale auftreten können. Bei dem betreffenden bekannten Verfahren kann es jedoch vorkommen, dass die zu übertragenden Daten erst nach relativ langen Verzögerungszeiten übertragen werden können, bis für die Übertragung geeignete Übertragungskanäle ausgewählt und bereitgestellt sind.

Der Erfindung liegt demgemäss die Aufgabe zugrunde, die Zeitschlitze eines dynamischen Multiplexers derart zu belegen, dass bei hoher Flexibilität hinsichtlich unterschiedlicher Bitraten ohne erhebliche Verzögerungszeiten ein grosser Anteil der Übertragungskapazität der Zeitmultiplexstrecke zur Übertragung der eigentlichen Nachrichten zur Verfügung steht.

Gelöst wird die vorstehend aufgezeigte Aufgabe bei einem Verfahren der eingangs genannten Art erfindungsgemäss durch die Ausführung folgender weiterer Verfahrensschritte:

C. Falls bei der Suche nach freien Zeitschlitzgruppen innerhalb der Ordnung m keine freie Zeitschlitzgruppe der Ordnung i gefunden wurde, wird jeweils innerhalb weiterer Zeitschlitzgruppen der Ordnung m gesucht.

D. Jedem Zeitschlitz einer gefundenen freien Gruppe von Zeitschlitzen wird eine Adresse zugeordnet und diese Zuordnung wird dem Multiplexer der Gegenstelle signalisiert, der seinerseits die entsprechende Zuordnung veranlasst.

E. Unabhängig von der Ermittlung einer Gruppe von freien Zeitschlitzen werden entgegengesetzt der festgelegten Reihenfolge belegte Gruppen von Zeitschlitzen gesucht.

F. Sobald eine belegte Gruppe von Zeitschlitzen gefunden ist, wird in der festgesetzten Reihenfolge eine neue Gruppe gleicher Ordnung — wie die der belegten — von freien Zeitschlitzen gesucht, die in der festgelegten Reihenfolge vor der gefundenden belegten Gruppe liegen muss.

G. Wenn die neue Gruppe von freien Zeitschlitzen gefunden ist, wird diesen Zeitschlitzen die der belegten Gruppe zugeordnete Adresse zugeordnet und diese Zuordnung wird dem Multiplexer der Gegenstelle signalisiert, der seinerseits eine entsprechende Zuordnung veranlasst.

H. Sobald die neue Gruppe von Zeitschlitzen belegt ist, wird die bisher belegte Gruppe von Zeitschlitzen freigegeben.

Die Erfindung zeichnet sich dadurch aus, dass bei hoher Flexibilität hinsichtlich der mit verschiedenen Bitraten anfallenden Daten nur geringe Verzögerungszeiten zu erwarten sind und dass ein grosser Anteil der Übertragungskapazität der Zeitmultiplexstrecke zur Übertragung der eigentlichen Nachrichten zur Verfügung steht. Der grosse Anteil an Übertragungskapazität zur Übertragung der eigentlichen Nachrichtenbits wird dadurch erreicht, dass die Zeitschlitze zur Übertragung der Zeitschlitzadressen lediglich vor Übertragung der eigentlichen Nachrichtenbits kurzzeitig herangezogen werden, aber — nach erfolgter Zuordnung der Zeitschlitzadressen — ausschliesslich zur Übertragung der Nachrichtenbits zur Verfügung stehen. Da die Zuordnungen der Zeitschlitzadressen in den Multiplexern gespeichert sind, erübrigt es sich, die Adressen während der gesamten Dauer der Nachrichtenübertragung zu übertragen.

Falls die Zuordnungen der Zeitschlitze so wenig wie möglich geändert werden sollen, ist es zweckmässig, die folgenden Merkmale anzuwenden:

K. Eine freie Zeitschlitzgruppe der Ordnung i wird, beginnend mit der Zeitschlitzgruppe der Ordnung m mit der Zahl 0 zugeordneten Zeitschlitz Nummer 0 gesucht, wobei mit den Nummern der Zeitschlitzgruppe der Ordnung m die Reihenfolge der Zeitschlitze festgelegt wird und wobei eine Zeitschlitzgruppe der Ordnung i $\geq$ 1 aus einer Zeitschlitzgruppe der Ordnung i − 1 und aus jenen Zeitschlitzen besteht, deren Nummern sich durch Addition der Zeitschlitznummern der Ordnung $i-1$ und der Zahl $2^{m-i}$ mal n ergeben.

L. Falls bei der Suche nach freien Zeitschlitzen, beginnend mit dem Zeitschlitz Nummer 0 der Zeitschlitzgruppe der Ordnung m keine freie Zeitschlitzgruppe der Ordnung i gefunden wurde, wird jeweils — beginnend mit den den Zahlen 1 bis $n-1$ zugeordneten Zeitschlitzen — innerhalb der weiteren Zeitschlitzgruppen der Ordnung m gesucht, wobei sich die Nummern der Zeitschlitze der Reihe nach um die Zahlen 1 bis $n-1$ von den entsprechenden Nummern der Zeitschlitzgruppe der Ordnung m mit dem Zeitschlitz Nummer 0 unterscheiden.

M. Die belegten Gruppen von Zeitschlitzen werden — beginnend mit dem letzten Zeitschlitz und entgegengesetzt der festgelegten Reihenfolge gesucht.

N. Sobald eine belegte Gruppe von Zeitschlitzen gefunden ist, wird in der festgelegten Reihenfolge eine neue Gruppe gleicher Ordnung von freien Zeitschlitzen gesucht, die im Hinblick auf die festgelegte Reihenfolge näher an dem Zeitschlitz Nummer 0 gelegen ist als die gefundene belegte Gruppe.

Falls der Aufbau und der Abbau der Teilnehmerverbindungen und die Änderungen der Zuordnungen möglichst schnell erfolgen sollen und die Laufzeiten der Daten kurz sein sollen, dann ist es zweckmässig, dass sowohl für die Vorwärtsrichtung als auch für die Rückwärtsrichtung die gleiche Adresse den gleichen Zeitschlitzen zugeordnet wird.

Zur optimalen schaltungstechnischen Realisierung ist es zweckmässig, dass bei beiden dynamischen Multiplexern die Zeitschlitze in derselben festgelegten Reihenfolge belegt werden und dass die Zuordnungen bei beiden Multiplexern in gleicher Weise geändert werden.

Bei einem bevorzugten Ausführungsbeispiel der Erfindung, bei dem keine Pufferspeicher benötigt werden, wird derart vorgegangen, dass Teilnehmer, die Daten übertragen vollen, sich beim dynamischen Multiplexer anmelden, dass der dynamische Multiplexer die benötigte Gruppe von Zeitschlitzen sucht, dass nach erfolgter Zuordnung der Adressen zu den Zeitschlitzen der betreffende Teilnehmer eine Sendeerlaubnis erhält und dass der Teilnehmer — wenn er seine Daten abgesetzt hat — sich beim dynamischen Multiplexer abmeldet, der daraufhin die Zuordnung aufhebt.

Im folgenden werden Ausführungsbeispiele der Erfindung anhand der Figuren 1 bis 4 beschrieben, wobei in mehreren Figuren dargestellte Gegenstände mit gleichen Bezugszeichen gekennzeichnet sind.

Es zeigen:

Fig. 1 ein Zeitmultiplexsystem mit dynamischen Multiplexern,

Fig. 2 ein Zeitmultiplexsignal und Diagramme von Zeitschlitzbelegungen,

Fig. 3 einen Multiplexerteil des in Fig. 1 schematisch dargestellten Multiplexers und

Fig. 4 einen Demultiplexerteil des in Fig. 1 schematisch dargestellten Multiplexers.

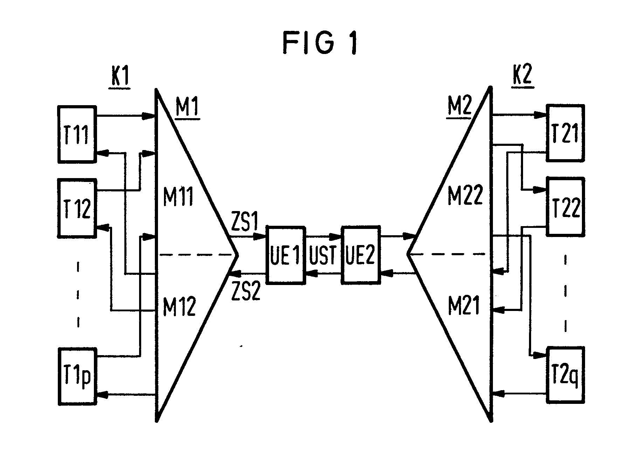

Fig. 1 zeigt ein Zeitmultiplex-Übertragungssystem. Im Bereich des dynamischen Multiplexers M1 sind die Übertragungseinrichtung UE1 und die Teilnehmer T11, T12, ... T1p vorgesehen. Im Bereich des dynamischen Multiplexers M2 befinden sich die Übertragungseinrichtung UE2 und die Teilnehmer T21, T22, ... T2q. Die beiden Multiplexer sind über die Übertragungsstrecke UST miteinander verbunden. Über diese Übertragungsstrecke sollen die Nachrichten in beiden Richtungen übertragen werden.

Hinsichtlich der Zuordnung der Teilnehmer werden mehrere Möglichkeiten unterschieden. Gemäss einer ersten Möglichkeit sind die Teilnehmer T11, T12 ... T1p in umkehrbar eindeutiger Weise den Teilnehmern T21, T22 ... T2q zugeordnet. In diesem Fall sind mit $p = q$ an beide Multiplexer gleich viele Teilnehmer angeschlossen und es ist bereits durch den Anschluss der Kanäle K1 an den Multiplexer M1 einerseits und durch den Anschluss der Kanäle K2 an den Multiplexer M2 andererseits die umkehrbar eindeutige Zuordnung gegeben. Beispielsweise können die Teilnehmer T11 bis T1p der Reihe nach je an die Teilnehmer T21 bis T2q angeschlossen sein, so dass zwischen je zweien der genannten Teilnehmer Datenverbindungen in beiden Richtungen bestehen. Dabei wird aber vorausgesetzt, dass die Daten der einzelnen Teilnehmer T11 bis T1p mit unterschiedlicher Bitrate abgegeben und empfangen werden. Das Gleiche gilt für die Teilnehmer T21 bis T2q. Da es sich um dynamische Multiplexer M1 und M2 handelt, ist die Anzahl p der Teilnehmer grösser als die Anzahl der zur Übertragung der Nachrichten verwendeten Zeitschlitze des Zeitmultiplexsignals ZS1. In gleicher Weise ist auch die Anzahl q der Teilnehmer grösser als die Anzahl jener Zeitschlitze des Zeitmultiplexsignals ZS2, die zur Übertragung der eigentlichen Nachrichten dienen.

Eine zweite Möglichkeit der Zuordnung der Teilnehmer wird darin gesehen, wenn mindestens einzelne der Teilnehmer T11 bis T1p wahlweise an adressierbare Teilnehmer T21 bis T2q angeschlossen werden können. In diesem Fall wird sind verschieden viele Teilnehmer an die Multiplexer angeschlossen, so dass die Zahl p ungleich der Zahl q ist. Auch in diesem Fall werden aber unterschiedliche Bitraten der über die einzelnen Kanäle übertragenen Daten vorausgesetzt. Ausserdem wird auch wieder angenommen, dass die Anzahl der zur Nachrichtenübermittlung vorhandenen Zeitschlitze geringer ist als die Anzahl der entsprechenden Teilnehmer und Kanäle.

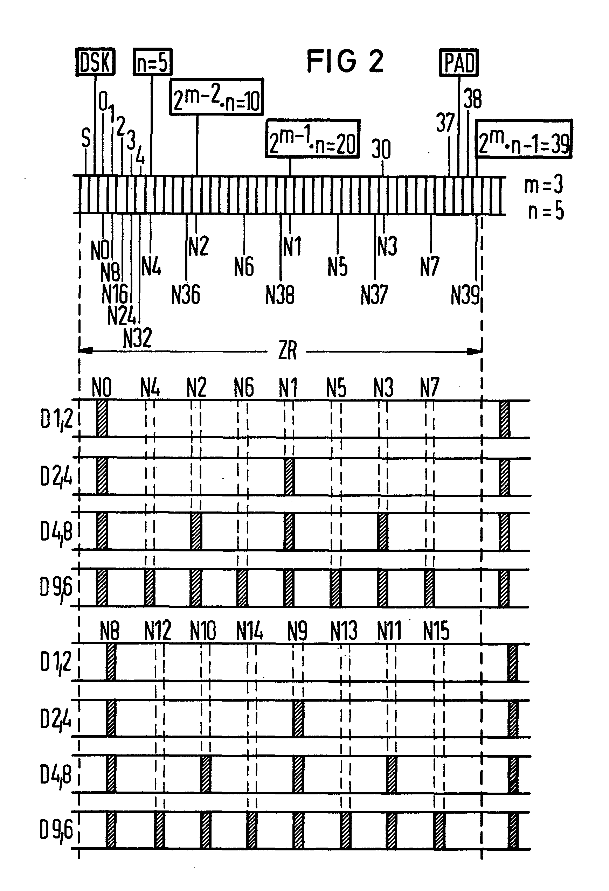

Fig. 2 zeigt oben ein Ausführungsbeispiel des Zeitmultiplexsignals ZS1. Der Zeitmultiplexrahmen ZR enthält insgesamt 43 Zeitschlitze. Innerhalb dieser Zeitschlitze kann jeweils entweder nur je ein einziges Bit übertragen werden oder aber es können Worte mit je mehreren Bits übertragen werden. Bei diesem Ausführungsbeispiel werden pro Zeitschlitz je zehn Bits übertragen. Die Zeitschlitze S, DSK, PAD haben mit der vorliegenden Erfindung nichts zu tun und werden nur der Vollständigkeit halber erwähnt. Davon dient der Zeitschlitz S zur Synchronisierung, der Zeitschlitz DSK dient zur Übertragung von Dienstsignalen und mit Hilfe des Zeitschlitzes PAD werden gelegentlich Geschwindigkeitskorrekturen bzw. Bitratenkorrekturen vorgenommen, weil es Zeitmultiplexrahmen mit diesem Zeitschlitz PAD als auch Zeitmultiplexrahmen ohne diesen Zeitschlitz PAD gibt. Die eigentlichen Nachrichten werden aber während der Dauer der 40 Zeitschlitze übertragen, denen die Zahlen 0, 1, 2, 3, 4, 5 ... 39 zugeordnet sind. Dabei wird angenommen, dass sich die Zahl 40 in der Form $2^m$ mal n darstellen lässt, wobei die Zahl m eine der positiven ganzen Zahlen $\geq 1$ und die Zahl n eine Primzahl bedeutet. Im vorliegenden Fall sind mit $2^3$ mal 5 insgesamt 40 Zeitschlitze zur Übertragung der eigentlichen Nachrichten vorgesehen. Dem letzten Zeitschlitz ist allgemein die Zahl $(2^m$ mal $n) - 1$ zugeordnet. Dem Zeitschlitz, dem die Zahl 20 zugeordnet ist, entspricht allgemein die Zahl $2^{m-1}$ mal n. Dem Zeitschlitz, dem die Zahl 10 zugeordnet ist, entspricht allgemein die Zahl $2^{m-2}$ mal n und dem Zeitschlitz, dem die Zahl 5 zugeordnet ist, entspricht allgemein die Zahl n. Ausser den Zahlen 0 bis 39 sind den Zeitschlitzen Nummern N0 bis N39 zugeordnet, durch welche eine Reihenfolge R festgelegt wird.

Da die Daten voraussetzungsgemäss mit unterschiedlichen Bitraten bzw. Geschwindigkeiten anfallen, müssen pro Zeitmultiplexrahmen ZR für einen Datenkanal fallweise nur ein Zeitschlitz und fallweise aber auch mehrere Zeitschlitze vorgesehen sein. Bei dieser Darstellung wurde angenommen, dass für die Daten D1,2, die mit einer Bitrate von 1,2 kBit pro Sekunde anfallen, nur ein einziger Zeitschlitz erforderlich ist. Beispielweise können die Daten eines einzigen Datenkanals über den Zeitschlitz übertragen werden, dem die Zahl 0 zugeordnet ist. Es wäre also grundsätzlich denkbar, die Daten von 40 derartigen Datenkanälen über die 40 Zeitschlitze des Zeitmultiplexsignals zu übertragen. Im allgemeinen ist dies aber nicht möglich, da ja damit gerechnet werden muss, dass auch Daten höherer Geschwindigkeit bzw. Bitraten anfallen. Beispielsweise werden für die Daten D2,4 die mit einer Bitrate von 2,4 kBit pro Sekunde anfallen, je zwei Zeitschlitze pro Zeitmultiplexrahmen benötigt. Gemäss Fig. 2 können dies beispielsweise die Zeitschlitze sein, denen die Zahlen 0 und 20 zugeordnet sind. Diese Zahlen unterscheiden sich um das Vierfache der Zahl n = 5. Insgesamt könnten im Rahmen des Zeitmultiplexsignals 20 derartige Datenkanäle angeschlossen werden, falls keine Daten anderer Bitraten zu übertragen wären.

Falls Daten D4,8 mit einer Bitrate von 4,8 kBit pro Sekunde anfallen, dann müssen pro Zeitmultiplexrahmen je vier Zeitschlitze reserviert werden. Es können dies beispielsweise die Zeitschlitze mit den Nummern N0, N1, N2, N3 sein. Insgesamt könnten 10 derartige Datenkanäle an die Zeitmultiplexstrecke angeschlossen sein. Diese vier Zeitschlitze mit den Nummern N0, N1, N2, N3 beiden eine Gruppe, die durch ihre Ordnung i = 2 charakterisiert wird. Dabei wird unterstellt, dass diese Gruppe insgesamt aus $2^i = 4$ Zeitschlitzen gebildet wird. Die dargestellte Gruppe enthält den Zeitschlitz mit der Nummer N0. Unter den gemachten Voraussetzungen sind insgesamt achs verschiedene Gruppen der Ordnung 2 möglich. Beispielsweise ist in Fig. 2 unten beim Datensignal D4,8 eine Gruppe der Ordnung 2 dargestellt, die aus den Zeitschlitzen Nummer N8, N9, N10 und N11 gebildet wird.

Wenn die Daten D9,6 mit einer Bitrate von 9,6 kBit pro Sekunde anfallen, dann müssen pro Zeitmultiplexrahmen insgesamt acht Zeitschlitze reserviert werden. Es können dies die Zeitschlitze mit den Nummern N0, N1, N2, N3, N4, N5, N6, N7 sein, die mit i = 3 eine Gruppe dritter Ordnung bilden. Unter den gemachten Voraussetzungen sind fünf verschiedene Gruppen der Ordnung 3 möglich. Beispielsweise ist in Fig. 2 unten beim Datensignal D9,6 die Gruppe von Zeitschlitzen mit den Nummern, N8, N9, N10, N11, N12, N13, N14, N15 dargestellt. Beginnend mit den Zeitschlitzen Nummer N16 bzw. N24 bzw. N32 können weitere Gruppen der Ordnung i = 3 gebildet werden.

Vor Belegung der Zeitschlitze müssen freie Zeitschlitze ermittelt werden. Dabei werden die einzelnen Zeitschlitze in einer vorgegebenen Reihenfolge überprüft. Wenn beispielsweise eine Gruppe dritter Ordnung benötigt wird, dann werden die Zeitschlitze mit den Nummern N0, N1, N2, N3, N4, N5, N6, N7 in dieser Reihenfolge überprüft. Wenn einer dieser Zeitschlitzes N0 bis N7 bereits belegt ist, dann ist diese gruppe zur Übertragung der Daten D9,6 nicht mehr brauchbar und es wird eine andere Gruppe dritter Ordnung untersucht; beispielsweise die Gruppe dritter Ordnung beginnend mit dem Zeitschlitz Nummer N8. Dabei wird die folgende Reihenfolge der Zeitschlitze und Nummern eingehalten: $N(0+8) = N8$, $N(1+8) = N9$, $N(2+8) = N10$, $N(3+8) = N11$, $N(4+8) = N12$, $N(5+8) = N13$, $N(6+8) = N14$, $N(7+8) = N15$. Falls auch nur ein einziger Zeitschlitz dieser Gruppe belegt ist, muss eine andere Gruppe dritter Ordnung, beispielsweise die Gruppe beginnend mit den Zeitschlitzen $N(0+16) = N16$ und $N(7+16) = N23$ untersucht werden. Sollten die Daten auch in dieser Gruppe nicht unterbringbar sein, dann wird eine weitere Gruppe dritter Ordnung untersucht. Falls erforderlich, wird auch die letzte Gruppe dritter Ordnung untersucht. Falls mindestens ein Zeitschlitz dieser letzten Gruppe ebenfalls belegt ist, dann können die Daten D9,6 im Augenblick nicht übertragen werden und müssen so lange entweder beim Teilnehmer oder im Multiplexer zwischengespeichert werden, bis eine Gruppe von Zeitschlitzen der dritten Ordnung zur Verfügung steht.

Falls im Augenblick keine Gruppe der dritten Ordnung zur Datenübertragung verfügbar ist, dann müssen nicht notwendigerweise alle Zeitschlitze des Zeitmultiplexrahmens belegt sein. Möglicherweise sind dann Gruppen niedrigerer Ordnung verfügbar. Wenn beispielsweise, wie in Fig. 2 dargestellt, mit den Daten D1,2 der Zeitschlitz N0 belegt ist und wenn die Daten D2,4 zu übertragen sind, dann muss eine Gruppe der Ordnung 1 gesucht und gefunden werden. Da von der Gruppe erster Ordnung mit den Zeitschlitzen N0 und N1 der Zeitschlitz N0 voraussetzungsgemäss bereits belegt ist, sind diese beiden Zeitschlitze nicht mehr geeignet, die Daten D2,4 zu übertragen. In diesem Fall sind aber die Zeitschlitze N2 und N3 noch frei und daher können diese Zeitschlitze zur Übertragung des Datensignals D2,4 benutzt werden. Wenn danach zur Übertragung der Daten D1,2 nur ein einziger Zeitschlitz benötigt wird, dann wird erneut in der Reihenfolge der Nummern N0, N1 gesucht, und es wird unter den gemachten Voraussetzungen festgestellt, dass der Zeitschlitz N1 noch frei ist. Über diesen Zeitschlitz N1 werden dann die Daten D1,2 übertragen.

Die Tabelle 1 zeigt in etwas allgemeinerer Darstellung die Reihenfolge, in der die Belegung der einzelnen Zeitschlitze überprüft wird. Aus der ersten Kolonne ist die Reihenfolge R die Nummern N1 bis N7 ersichtlich. Die zweite Kolonne bezieht sich auf die Gruppen GR. Aus dieser Tabelle 1 ist aber nur jene Reihenfolge von Zeitschlitzen und Nummern ersichtlich, die ab dem Zeitschlitz N0 bis i = m = 3 vorgegeben ist. Auf die Reihenfolge, die ab den Zeitschlitzen mit den Nummern N8, N16 ... N32 beginnt, wird später eingegangen. Aus der Tabelle 1 sind die Gruppen GR0, GR1, GR2, GR3, der Ordnung 0 bzw. 1 bzw.

2 bzw. 3 ersichtlich. Mit i = 0 besteht die Gruppe der Ordnung 0 nur aus dem einzigen Zeitschlitz der Nummer N0, die der Zahl 0 entspricht.

Tabelle 1

| R | GR | | | |
|---|---|---|---|---|
| N0 = 0 | GR0 i=0 | | | |
| $N1 = N0 + 2^{m-1} \cdot n$ | | GR1 i=1 | | |
| $N2 = N0 + 2^{m-2} \cdot n$ $N3 = N1 + 2^{m-2} \cdot n$ | | | GR2 i=2 | |
| $N4 = N0 + 2^{m-3} \cdot n$ $N5 = N1 + 2^{m-3} \cdot n$ $N6 = N2 + 2^{m-3} \cdot n$ $N7 = N3 + 2^{m-3} \cdot n$ | | | | GR3 i=3 |

Mit i = 1 besteht die Gruppe GR1 der Ordnung 1 aus den Zeitschlitzen mit der Nummer N0 und mit der Nummer $N1 = 2^{m-1}$ mal n.

Mit i = 2 besteht die Gruppe GR2 der Ordnung 2 aus den Zeitschlitzen Nummer N0, N1 und aus jenen Zeitschlitzen, deren Nummer sich durch Addition der Nummer N0 bzw. N1 und der Zahl $2^{m-2}$ mal n ergeben. Die Gruppe GR2 umfasst also die Zeitschlitze mit den Nummern N0, N1, N2, N3. Die Gruppe GR3 der Ordnung 3 besteht einerseits aus den Zeitschlitzen mit den Nummern N0, N1, N2 und N3. Die weiteren Nummern N4, N5, N6, N7 ergeben sich durch Addition der Nummern N0 bzw. N1 bzw. N2 bzw. N3 und der Zahl $2^{m-3}$ mal n.

Im allgemeinen besteht die Zeitschlitzgruppe der Ordnung i aus der Zeitschlitzgruppe der Ordnung i − 1 und aus jenen Zeitschlitzen, deren Nummern sich durch Addition der Nummern der Ordnung i − 1 und der Zahl $2^{m-i}$ mal n ergeben.

Es wurde bereits erwähnt, dass die Tabelle 1 nur für die Gruppen der Ordnung i gilt, für die einerseits i maximal gleich m ist und welche den Zeitschlitz mit

der Nummer N0 enthalten. Hinsichtlich der Nummern N8 bis N15 ist die Reihenfolge R durch die Tabelle 2 gegeben. Danach ergeben sich die Zeitschlitze mit den Nummern N8 bis N15, indem man der Reihe nach zu den Nummern N0 bis N7 die Zahl 1 addiert. Ähnlich ergeben sich die Zeitschlitze mit den Nummern N16 bis N23 bzw. N24 bis N31 bzw. N32 bis N33, indem man der Reihe nach zu den Nummern N0 bis N7 die Zahlen 2 bzw. 3 bzw. 4 addiert.

Zusammenfassend lässt sich sagen, dass ab der Nummer N0 die Reihenfolge R durch die Gruppe der Ordnung i = m gegeben ist, wie am Beispiel der Tabelle 1 erläutert wurde. Ab dem Zeitschlitz mit der Nummer $N(2^m)$ ist die Reihenfolge R durch die Gruppe der Ordnung i = m gegeben, deren Nummern mit $N(2^m)$ beginnen und die am Beispiel der Tabelle 2 erläutert wurden. Ab dem Zeitschlitz $N(2^{m+1})$ ist die Reihenfolge R durch die Gruppe der Ordnung i = m gegeben, deren Nummern mit $N(2^{m+1})$ beginnen. In dieser Weise wird fortgefahren, bis ab der Nummer $N(2^{m+n-3})$ die Reihenfolge durch die letzte Gruppe der Ordnung i = m festgelegt wird.

Tabelle 2

| R | GR | | | |
|---|---|---|---|---|
| N8 = 1 | GR0 i=0 | | | |
| $N9 = N8 + 2^{m-1} \cdot n = N1 + 1$ | | GR1 i=1 | | |
| $N10 = N8 + 2^{m-2} \cdot n = N2 + 1$ $N11 = N9 + 2^{m-2} \cdot n = N3 + 1$ | | | GR2 i=2 | |
| $N12 = N8 + 2^{m-3} \cdot n = N4 + 1$ $N13 = N9 + 2^{m-3} \cdot n = N5 + 1$ $N14 = N10 + 2^{m-3} \cdot n = N6 + 1$ $N15 = N11 + 2^{m-3} \cdot n = N7 + 1$ | | | | GR3 i=3 |

Die Zahl i kann entweder die Zahl 0 bedeuten oder eine der positiven ganzen Zahlen, die kleiner oder gleich der Zahl m sind. Die Zeitschlitzgruppe mit der Ordnung m ist somit die Gruppe mit den jeweils meisten Zeitschlitzen. Jede Gruppe besteht aus $2^i$ Zeitschlitzen. Die Zeitschlitze, denen die Zahlen 0 bis $(2^m$ mal n) $- 1$ zugeordnet sind, können je als Zeitschlitzgruppe der Ordnung 0 mit je einem Zeitschlitz angesehen werden, da $2^0 = 1$ ist. Die weiteren Gruppen enthalten $2^i$ Zeitschlitze, von denen die Gruppe $2^m$ die meisten Zeitschlitze enthält. Falls bei der Übertragung von Daten mindestens einer der Zeitschlitze belegt wird, dann können Daten mit $m + 1$ unterschiedlichen Bitraten übertragen werden. Beispielsweise können gemäss Fig. 2 mit $m = 3$ die Daten D1,2; D2,4; D4,8 und D9,6 mit insgesamt vier verschiedenen Bitraten übertragen werden. Das hier beschriebene Verfahren zur Belegung von Zeitschlitzen lässt sich durch die folgenden Verfahrensschritte beschreiben:

1. Vor Belegung der Zeitschlitze wird in Abhängigkeit von der gerade vorliegenden Bitrate der zu übertragenden Daten die Ordnung i der benötigten Zeitschlitzgruppe festgestellt. Wenn also beispielsweise die Daten D2,4 mit einer Bitrate von 2,4 kBit pro Sekunde übertragen werden sollen, dann wird zunächst die Ordnung $i = 2$ der erforderlichen Zeitschlitzgruppe ermittelt.

2. Zur Ermittlung freier Zeitschlitze werden gemäss einer festgelegten Reihenfolge die Zeitschlitzgruppen der Ordnung i innerhalb einer Zeitschlitzgruppe der Ordnung m überprüft, bis eine freie Zeitschlitzgruppe der Ordnung i gefunden ist. Bei vorliegendem Ausführungsbeispiel werden die Zeitschlitzgruppen der Ordnung $i = 2$ innerhalb der Zeitschlitzgruppe der Ordnung $m = 3$ überprüft, wobei mit dem Zeitschlitz Nummer 0 begonnen wird. Es wird also zunächst überprüft, ob die Zeitschlitze Nummer N0 und N1 innerhalb der Zeitschlitzgruppe mit den Nummern N0, N1, N2, N3, N4, N5, N6, N7 noch frei ist. Sollte einer der beiden Zeitschlitze Nummer N0 oder N1 bereits belegt sein, dann werden die Zeitschlitze Nummer N2 und N3 überprüft. Dabei wird durch die Zeitschlitzgruppe der Ordnung m eine Folge von Zeitschlitzen festgelegt, die mit der Zeitschlitzgruppe der Ordnung 0 — bestehend aus dem Zeitschlitz Nummer 0 — beginnt. Die weiteren Nummern der Zeitschlitzgruppe der Ordnung m lassen sich rekursiv mit Hilfe der Zeitschlitzgruppen der niedrigeren Ordnung i beschreiben. Dies deshalb, weil die Zeitschlitzgruppe der Ordnung i aus der Zeitschlitzgruppe der Ordnung $i - 1$ besteht und zusätzlich aus jenen Zeitschlitzen, deren Nummern sich durch Addition der Zeitschlitznummer der Ordnung $i - 1$ und der Zahl $2^{m-i}$ mal n ergeben. Dieser Sachverhalt ist im Detail auch aus der bereits beschriebenen Tabelle 1 abzulesen.

3. Falls bei der Suche nach freien Zeitschlitzgruppen innerhalb der Ordnung m keine freie Zeitschlitzgruppe der Ordnung i gefunden wurde, dann wird innerhalb weiterer Zeitschlitzgruppen der Ordnung m gesucht. Wenn innerhalb der Zeitschlitzgruppe der Ordnung 3 mit den Zeitschlitzen Nummer N0, N1, N2, N3, N4, N5, N6, N7 keine freie Zeitschlitzgruppe der Ordnung 2 auffindbar ist, dann wird innerhalb einer anderen Zeitschlitzgruppe der Ordnung 3 gesucht; beispielsweise innerhalb der Gruppe mit dem Zeitschlitz N8. Es handelt sich hier also um die Zeitschlitzgruppe der Ordnung 3, die aus den Zeitschlitzen der Nummern N8, N9, N10, N11, N12, N13, N14, N15 besteht. Falls nach weiter gesucht werden muss, wird innerhalb weiterer Zeitschlitzgruppen der Ordnung 3 gesucht, also innerhalb der Gruppen mit dem Zeitschlitz N16 bzw. N24 bzw. N32. Wenn innerhalb der Zeitschlitzgruppe der Ordnung 3 mit dem Zeitschlitz N0 keine freie Zeitschlitzgruppe der Ordnung 2 verfügbar ist, dann könnte prinzipiell auch innerhalb jener Zeitschlitzgruppe der Ordnung 3 gesucht werden, die den Zeitschlitz N32 enthält. Die diesbezügliche Reihenfolge ist zwar festgelegt, aber prinzipiell gleichgültig. Dabei unterscheiden sich diese Zeitschlitzgruppen der Ordnung 3, die mit den Zeitschlitzen der Nummern N8, N16, N24, N32 beginnen, der Reihe um die Zahlen 1 bis 4 von den entsprechenden Nummern der Zeitschlitzgruppe mit dem Zeitschlitz Nummer 0.

4. Wenn eine Gruppe von freien Zeitschlitzen gefunden wurde, wird jedem Zeitschlitz dieser Gruppe eine Adresse zugeordnet und diese Zuordnung wird dem Multiplexer der Gegenstelle signalisiert, der seinerseits eine entsprechende Zuordnung veranlasst. Wenn also im Bereich des in Fig. 1 dargestellten Multiplexers M1 eine Gruppe von freien Zeitschlitzen gefunden wurde, dann wird jedem Zeitschlitz dieser Gruppe eine Adresse zugeordnet. Wenn beispielsweise eine Gruppe zweiter Ordnung benötigt wird und die in Fig. 2 dargestellte Gruppe von freien Zeitschlitzen mit den Nummern N0, N1, N2, N3 gefunden wurde, dann wird diesen Zeitschlitzen ein und dieselbe Adresse zugeordnet; es ist zweckmässig, dies sowohl für die Vorwärtsrichtung vom Multiplexer M1 zum Multiplexer M2 durchzuführen als auch für die Rückwärtsrichtung vom Multiplexer M2 zum Multiplexer M1. Diese Zuordnung wird vom Multiplexer M1 aus auch dem Multiplexer M2 der Gegenstelle signalisiert, der seinerseits eine entsprechende Zuordnung veranlasst. Danach sind über die jeweils ermittelten freien Zeitschlitze die Verbindungen der rufenden Teilnehmer zu den gerufenen Teilnehmern hergestellt.

5. Unabhängig von der Ermittlung einer Gruppe von freien Zeitschlitzen werden entgegengesetzt der festgelegten Reihenfolge belegte Gruppen von Zeitschlitzen gesucht. Dies kann während oder nach der Ermittlung einer Gruppe von freien Zeitschlitzen geschehen. Falls die anhand der Fig. 2 beschriebene Reihenfolge R eingehalten wird, dann wird entgegengesetzt zu dieser festgelegten Reihenfolge R nach belegten Gruppen von Zeitschlitzen gesucht. Bei vorliegendem Ausführungsbeispiel werden somit die Zeitschlitze N39, N38, ... N3, N2, N1, N0 durchsucht. Diese Suche erstreckt sich auf Gruppen aller Ordnungen.

6. Wurde eine belegte Gruppe von Zeitschlitzen gefunden, dann wird eine neue freie Gruppe von Zeitschlitzen gesucht, die im Hinblick auf die festgelegte Reihenfolge vor der gefundenen belegten Gruppe liegen muss. Unter Zugrundelegung des Ausführungsbeispiels nach Fig. 2 muss sie näher an dem ersten Zeitschlitz Nummer N0 liegen. Es wird beispielswei-

se angenommen, dass die Zeitschlitze N39 und N38 frei sind und dass der Zeitschlitz N37 belegt ist. Unter diesen Voraussetzungen kann der Zeitschlitz N37 keiner Gruppe der Ordnung 3 oder 2 angehören, wohl aber einer Gruppe der Ordnung 1 oder 0. Wenn der Zeitschlitz N37 zusammen mit dem Zeitschlitz N36 eine Gruppe der Ordnung 1 bildet, dann wird in der festgesetzten Reihenfolge eine neue Gruppe der Ordnung 1 von freien Zeitschlitzen gesucht, die im Hinblick auf diese festgelegte Reihenfolge näher an dem Zeitschlitz N0 gelegen ist. Beispielsweise wäre es günstig, wenn die Zeitschlitze N0 und N1 wieder frei wären.

7. Wenn die neue Gruppe von Zeitschlitzen gefunden ist, wird bei vorliegendem Ausführungsbeispiel den beiden Zeitschlitzen N0 und N1 sowohl für die Vorwärtsrichtung als auch für die Rückwärtsrichtung die den Zeitschlitzen N37 und N36 zugeordnete Adresse zugeordnet und diese Zuordnung wird dem Multiplexer der Gegenstelle signalisiert, der seinerseits eine entsprechende Zuordnung veranlasst. Damit ist die neue Gruppe, die aus den Zeitschlitzen N0 und N1 gebildet wird, belegt.

8. Sobald die neue Gruppe von Zeitschlitzen belegt ist, wird bei diesem Beispiel die Gruppe mit den Zeitschlitzen N36, N37 freigegeben.

Dem beschriebenen Verfahren entspricht die Tendenz, die Zeitschlitze des Zeitmultiplexrahmens derart zu belegen, dass für zukünftige Belegungen — insbesondere für Daten höherer Übertragungsgeschwindigkeit — eine optimale Übertragungskapazität zu Verfügung steht.

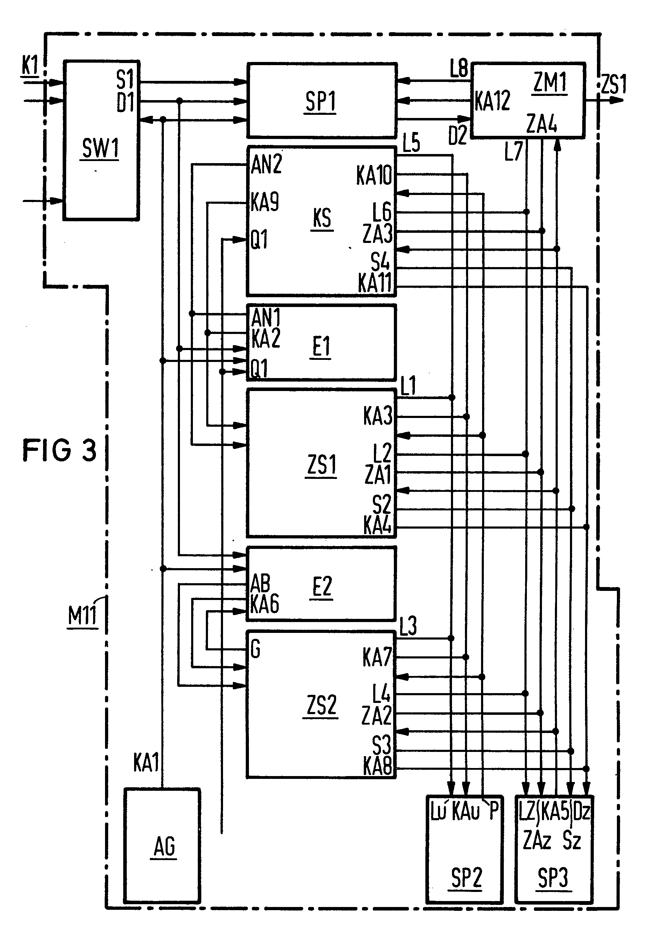

Fig. 3 zeigt den Multiplexerteil M11 des in Fig. 1 dargestellten Multiplexers M1. Der Adressengeber AG erzeugt zyklisch die Kanaladressen der Kanäle K1 und gibt diese Kanaladressen über den Ausgang KA1 ab. Die relative Häufigkeit einer Kanaladresse entspricht der Übertragungsgeschwindigkeit des betreffenden Kanals. Beispielsweise wird eine Kanaladresse für einen Kanal mit 9,6 kBit/s achtmal öfter erzeugt als eine Kanaladresse für einen mit 1,2 kBit/s.

Das Schaltwerk SW1 schaltet jeweils den durch die Kanaladresse KA1 angegebenen Kanal an den Ausgang D1 und gibt über den Ausgang S1 einen Schreibbefehl ab. Über den Ausgang D1 des Schaltwerkes SW1 werden somit die über die Kanäle übertragenen Daten abgegeben. Gleichzeitig wird über den Ausgang S1 der Schreibbefehl abgegeben.

Der Eingangsspeicher SP1 dient als Zwischenspeicher für die Daten. Er enthält für jeden Kanal eine Zelle. Wenn über den Ausgang S1 des Schaltwerkes SW1 ein Schreibbefehl abgegeben wird, dann werden die über den Ausgang D1 des Schaltwerkes SW abgegebenen Daten in jener Zelle des Eingangsspeichers SP1 gespeichert, die durch die betreffende Kanaladresse adressiert ist. Da die Kanaladressen zyklisch erzeugt werden, gelangen die Daten sämtlicher Kanäle zyklisch in den Eingangsspeicher SP1. Wenn über den Ausgang L8 des Zeitmultiplexsignalgenerators ZM1 ein Lesebefehl und über den Ausgang KA12 eine Kanaladresse abgegeben wird, dann gibt der Eingangsspeicher SP1 die Daten aus der mit der Kanaladresse adressierten Zelle ab. Diese Daten gelangen über den Ausgang D2 in den Zeitmultiplexsignalgenerator ZM1. Ausgelesen werden also nur jene Daten, für die Zeitschlitze im Zeitmultiplexsignal zugeteilt sind.

Der Geschwindigkeitsspeicher SP2 besitzt ebensoviele Zellen als Kanäle vorgesehen sind und speichert permanent für jeden Kanal die für diesen Kanal zugeteilte Übertragungsgeschwindigkeit. Mit einem Lesebefehl am Eingang Lu und mit einer Kanaladresse am Eingang KAu wird über den Ausgang P die in jener Zelle gespeicherte Übertragungsgeschwindigkeit ausgegeben, die mit der Kanaladresse adressiert ist.

Der Zeitschlitzspeicher SP3 besitzt ebensoviele Speicherzellen, wie Zeitschlitze im Zeitmultiplexrahmen vorgesehen sind. In diese Zellen werden Kanaladressen gespeichert. Der Zeitschlitzspeicher SP3 enthält somit die Zuordnung der Zeitschlitze des Zeitmultiplexrahmens zu den Kanälen, denen Zeitschlitze im Zeitmultiplexsignal zugeteilt sind. Zusätzlich werden Informationen gespeichert, die für das Herstellen und Aufheben der Zuordnung der Kanäle zu den Zeitschlitzen benötigt werden. Mit einem Schreibbefehl am Eingang Sz werden eine Kanaladresse und/oder die erwähnten Informationen über den Eingang DZ in jene Zelle eingeschrieben, die mit der Zeitschlitzadresse am Eingang ZAz adressiert ist. Gelesen wird der Inhalt einer Zelle durch einen Lesebefehl am Eingang Lz unter Berücksichtigung der am Eingang ZAz anliegenden Zeitschlitzadresse.

Der Anmeldungserkenner E1 erhält einerseits über den Ausgang D1 des Schaltwerkes SW1 die über die Kanäle übertragenen Daten und andererseits erhält er über den Ausgang KA1 des Adressengebers AG die zugehörige Kanaladresse. Aus einem Wechsel des Ruhesignals zum Anmeldesignal erkennt der Anmeldungserkenner, welche Kanäle einen Übertragungsweg wünschen. Wenn der Anmeldungserkenner E1 bei einem Kanal ein Anmeldesignal feststellt, dann meldet er dies über den Ausgang AN1 dem Zeitschlitzsucher ZS1. Gleichzeitig meldet der Anmeldungserkenner E1 über den Ausgang KA2 die dem Anmeldesignal zugehörige Kanaladresse.

Sobald für einen Kanal Zeitschlitze im Zeitmultiplexsignal in Vorwärts- und Rückwärtsrichtung zugeteilt sind und der in Fig. 1 dargestellte Demultiplexerteil M12 die Bestätigung für die Zuteilung vom Multiplexer M2 der Gegenstelle empfangen hat, erhält der Anmeldungserkenner E1 über den Eingang Q1 eine Quittung. Daraufhin signalisiert der Anmeldungserkenner an den Zeitschlitzsucher ZS1, welcher Kanal sich als nächster angemeldet hat.

Der Zeitschlitzsucher sucht für die Kanäle, bei denen der Anmeldungserkenner E1 eine Anmeldung erkannt hat oder für die der Kanalsucher KS eine Verlagerung anfordert, freie Zeitschlitze im Zeitschlitzspeicher SP3. Wenn der Zeitschlitzsucher ZS1 freie Zeitschlitze gefunden hat, dann bewirkt er die Speicherung der Kanaladressen im Zeitschlitzspeicher SP3.

Wenn über den Ausgang AN1 des Anmeldungserkenners E1 oder über den Ausgang AN2 des Kanalsuchers KS ein Signal abgegeben wird, das eine Anmeldung signalisiert, dann wird gleichzeitig über den Ausgang KA2 bzw. KA9 die zugehörige Kanaladresse an den Zeitschlitzsucher ZS1 abgegeben. Darauf-

hin gibt der Zeitschlitzsucher ZS1 über den Ausgang L1 einen Lesebefehl und über den Ausgang KA3 die Kanaladresse an den Geschwindigkeitsspeicher SP2 ab. Dieser Geschwindigkeitsspeicher SP2 gibt über den Ausgang P die Übertragungsgeschwindigkeit des adressierten Kanals an den Zeitschlitzsucher ZS1 ab. Dieser bestimmt aus der Übertragungsgeschwindigkeit die für den betreffenden Kanal erforderliche Ordnung der Zeitschlitzgruppe und sucht eine freie Gruppe dieser Ordnung im Zeitschlitzspeicher SP3, wobei die anhand der Tabellen 1 und 2 festgelegte Reihenfolge R eingehalten wird. Der Zeitschlitzsucher ZS1 gibt dazu über den Ausgang L2 Lesebefehle ab und gibt über den Ausgang ZA1 Zeitschlitzadressen an den Zeitschlitzspeicher ZP3. Dieser Zeitschlitzspeicher SP3 liefert den Inhalt der adressieren Zellen über den Ausgang KA5 an den Zeitschlitzsucher ZS1, der daraus erkennt, ob die jeweils adressierte Zelle belegt oder frei ist. Der Zeitschlitzsucher ZS1 durchsucht den Zeitschlitzspeicher SP3 in der festgelegten Reihenfolge R so lange, bis eine freie Gruppe von Zeitschlitzen gefunden ist.

Wenn der Zeitschlitzsucher ZS1 eine freie Gruppe gefunden hat, dann bewirkt er, dass in alle Zellen der freien Gruppe von Zeitschlitzen die betreffende Kanaladresse und die Information «Kanaladresse senden» eingetragen wird. Zum Eintragen liefert der Zeitschlitzsucher ZS1 über den Ausgang S2 Schreibbefehle, ferner über den Ausgang ZA1 die zur freien Gruppe gehörenden Zeitschlitzadressen und über den Ausgang KA4 liefert er die Kanaladresse sowie die Information «Kanaladresse senden».

Der Abmeldungserkenner E2 erkennt durch Überwachung der über die Kanäle übertragenen Signale, welche Kanäle durch Senden des Abmeldesignals anzeigen, dass sie den Übertragungsweg nicht mehr benötigen. Der Abmeldungserkenner E2 erhält über den Ausgang D1 des Schaltwerkes SW zyklisch die über die Kanäle übertragenen Signale und gleichzeitig erhält er über den Ausgang KA1 des Adressengebers AG die zugehörigen Kanaladressen. Wenn der Abmeldungserkenner E2 ein Abmeldesignal feststellt, dann meldet er dies über den Ausgang AB mit der zugehörigen Kanaladresse am Ausgang KA6 an den Zeitschlitzsucher ZS2.

Sobald die für den Kanal belegten Zeitschlitze im Zeitmultiplexsignal freigegeben sind, erhält der Abmeldungserkenner E2 über den Ausgang G des Zeitschlitzsuchers ZS2 eine Quittung. Daraufhin kann der Abmeldungserkenner E2 an den Zeitschlitzsucher ZS2 den Kanal melden, der sich als nächster abgemeldet hat.

Der Zeitschlitzsucher ZS2 sucht im Zeitschlitzspeicher SP3 die Zeitschlitze der Kanäle, bei denen der Abmeldungserkenner E2 eine Abmeldung erkannt hat und gibt diese Zeitschlitze wieder frei. Bei Anliegen einer Abmeldung am Ausgang AB mit zugehöriger Kanaladresse am Ausgang KA6 des Abmeldungserkenners E2 gibt der Zeitschlitzsucher ZS2 zuerst einen Lesebefehl über den Ausgang L3 mit der Kanaladresse am Ausgang KA7 an den Geschwindigkeitsspeicher SP2 ab. Dieser liefert die Übertragungsgeschwindigkeit des betreffenden Kanals über den Ausgang P an den Zeitschlitzsucher ZS2.

Der Zeitschlitzsucher ZS2 bestimmt aus der Übertragungsgeschwindigkeit die für diesen Kanal erforderliche Ordnung und durchsucht den Zeitschlitzspeicher SP3 in der Reihenfolge R nach Speicherzellen, die mit der betreffenden Kanaladresse belegt sind. Dazu gibt der Zeitschlitzsucher ZS2 über den Ausgang L4 jeweils Lesebefehle ab und gibt ausserdem über den Ausgang ZA2 Zeitschlitzadressen an den Zeitschlitzspeicher SP3. Dieser liefert den Inhalt der adressierten Zellen über den Ausgang KA5 an den Zeitschlitzsucher ZS2. Der Zeitschlitzsucher ZS2 vergleicht bei jeder Zelle, ob die in der Zelle gespeicherte Kanaladresse mit der gesuchten Kanaladresse übereinstimmt. Das Durchsuchen wird so lange fortgesetzt, bis die Gruppe von Zeitschlitzen gefunden ist, bei der die Übereinstimmung der Kanaladressen gegeben ist.

Wenn der Zeitschlitzsucher ZS2 die Gruppe mit den gesuchten Kanaladressen gefunden hat, dann trägt er in alle diese Gruppe betreffenden Zellen im Zeitschlitzspeicher SP3 die Information «Ruhesignal» ein. Hierfür gibt der Zeitschlitzsucher ZS2 Schreibbefehle über den Ausgang S3 ab, ausserdem gibt er über den Ausgang ZA2 die zur Gruppe gehörenden Zeitschlitzadressen ab und über den Ausgang KA8 gibt er die Information «Ruhesignal» ab.

Der Kanalsucher KS sucht laufend im Zeitschlitzspeicher SP3 belegte Zeitschlitze, wobei er entgegengesetzt der Reihenfolge R vorgeht und mit dem letzten Zeitschlitz beginnt. Der Kanalsucher KS meldet den jeweils gefundenen Kanal an den Zeitschlitzsucher ZS1. Nach Verlagerung des Kanals in Zeitschlitze, die näher an dem Zeitschlitz NO liegen, gibt er die bisher belegten Zeitschlitze frei.

Im einzelnen gibt der Kanalsucher KS über den Ausgang L6 Lesebefehle ab und über den Ausgang ZA3 gibt er an den Zeitschlitzspeicher SP3 die Zeitschlitzadressen entgegengesetzt der festgelegten Reihenfolge R. Der Zeitschlitzspeicher SP3 liefert den Inhalt der adressierten Zellen über den Ausgang KA5 an den Kanalsucher KS. Der Kanalsucher KS erkennt aus dem Zelleninhalt, ob die jeweilige Zelle belegt oder frei ist und durchsucht den Zeitschlitzspeicher SP3 so lange, bis eine belegte Zelle gefunden ist. Die in dieser Zelle enthaltene Kanaladresse liefert der Kanalsucher KS über den Ausgang KA9 an den Zeitschlitzsucher ZS1. Gleichzeitig liefert der Kanalsucher KS über den Ausgang AN2 ein Signal an den Zeitschlitzsucher ZS1.

Sobald für den zu verlagernden Kanal Zeitschlitze im Zeitmultiplexsignal in Vorwärts- und Rückwärtsrichtung zugeteilt sind und der Demultiplexerteil M12 die Bestätigung für die Zuteilung vom Multiplexer M2 der Gegenstelle empfangen hat, erhält der Kanalsucher KS über den Eingang Q1 die Quittung. Daraufhin gibt der Kanalsucher die bisher für den betreffenden Kanal belegten Zeitschlitze frei. Dazu gibt der Kanalsucher KS über den Ausgang L5 zunächst einen Lesebefehl ab und ausserdem gibt er über den Ausgang KA10 die Kanaladresse an den Geschwindigkeitsspeicher SP2 ab, der über den Ausgang P die Übertragungsgeschwindigkeit des betreffenden Kanals signalisiert. Der Kanalsucher bestimmt daraus die zu diesem Kanal gehörende Ordnung und trägt im Zeitschlitzspeicher SP3, beginnend mit der ersten als belegt gefundenen Zeitschlitzzelle, das «Ruhesignal» in alle Zeitschlitzzellen der Gruppe ein. Der Kanalsucher KS liefert für diese Eintragung einen Schreibbefehl über den Ausgang S4, ferner Zeitschlitzadressen über den Ausgang ZA3 und die Information «Ruhesignal» über den Ausgang KA11.

Der Zeitmultiplexsignalgenerator ZM1 erzeugt das Zeitmultiplexsignal ZS1, das zum Multiplexer M2 der Gegenstelle gesendet wird. Ein Ausführungsbeispiel dieses Zeitmultiplexsignals ist in Fig. 2 oben dargestellt.

Der Zeitmultiplexsignalgenerator ZM1 erzeugt Zeitschlitzadressen in der Reihenfolge der Zahlen 0, 1, 2, 3 ... 39 und gibt diese Zeitschlitzadressen über den Ausgang ZA4 zusammen mit einem Lesebefehl über den Ausgang L7 an den Zeitschlitzspeicher SP3 ab. Dieser Zeitschlitzspeicher liefert den Inhalt der durch die Zeitschlitzadresse angesprochenen Zelle über den Ausgang KA5 an den Zeitmultiplexsignalgenerator ZM1. Enthält die betreffende Zelle die Information «Ruhesignal», so fügt der Zeitmultiplexsignalgenerator in den betreffenden Zeitschlitz des Zeitmultiplexsignals ein Ruhesignal ein. Enthält die betreffende Zelle eine Kanaladresse und die Information «Kanaladresse senden», so fügt der Zeitmultiplexsignalgenerator in den betreffenden Zeitschlitz die Kanaladresse ein. Enthält die Zelle die Kanaladresse und die Information «Quittung senden», so fügt der Zeitmultiplexsignalgenerator in den Zeitschlitz ein Quittungssignal ein. Enthält die Zelle die Kanaladresse und die Information «Text senden», so gibt der Zeitmultiplexsignalgenerator ZM1 zuerst einen Lesebefehl über den Ausgang L8 und die Kanaladresse über den Ausgang KA12 an den Eingangsspeicher SP1 ab und fügt dann den Inhalt der im Eingangsspeicher SP1 angesprochenen Speicherzelle — der über den Ausgang D2 abgegeben wird — in den Zeitschlitz des Zeitmultiplexsignals ZS1 ein.

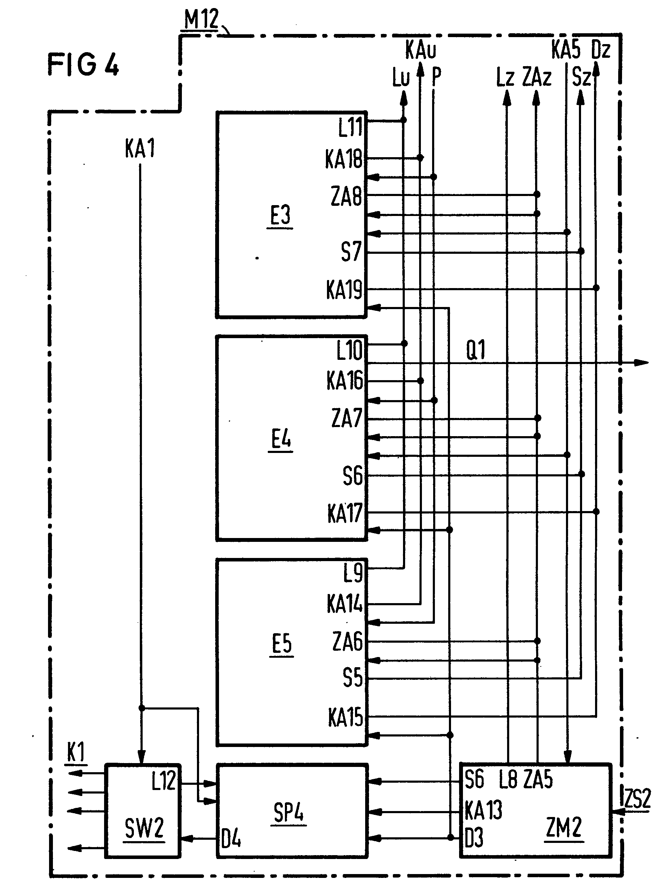

Fig. 4 zeigt den Demultiplexerteil M12, der schematisch auch in Fig. 1 dargestellt ist. Der Zeitmultiplexsignalempfänger ZM2 empfängt das vom Multiplexer M2 der Gegenstelle gesendete Zeitmultiplexsignal ZS2, erkennt das im Zeitmultiplexsignal enthaltene Rahmensynchronisierwort und liefert jeweils den Inhalt der Zeitschlitze für die Datensignale über den Ausgang D3 zusammen mit der Zeitschlitzadresse über den Ausgang ZA5 ab. Die Zeitschlitzadressen werden von einem Zähler erzeugt, der beim Empfang des Rahmensynchronisierwortes gestartet wird. Der Zeitmultiplexsignalempfänger gibt die Zeitschlitzadresse über den Ausgang ZA5 auch an den Zeitschlitzspeicher SP3 des Sendeteils M11 ab, zusammen mit einem Lesebefehl über den Ausgang L8. Der Zeitschlitzspeicher SP3 gibt den Inhalt der durch die Zeitschlitzadresse angesprochenen Speicherzelle über den Ausgang KA5 an den Zeitmultiplexsignalempfänger ZM2 ab. Enthält die Zelle eine von den Informationen «Ruhesignal», «Kanaladresse senden», «Quittung senden», so unterdrückt der Zeitmultiplexsignalempfänger ZM2 die Übergabe des im empfangenen Zeitschlitz enthaltenen Signals an den Ausgangsspeicher SP4. Enthält die Zelle eine Kanaladresse und die Information «Text senden», so übergibt der Zeitmultiplexsignalempfänger ZM2 das im empfangenen Zeitschlitz enthaltene Signal über den Ausgang D3 zusammen mit der Kanaladresse am Ausgang K13 und einem Schreibbefehl am Ausgang S6 an den Ausgangsspeicher SP4.

Der Ausgangsspeicher SP4 dient als Zwischenspeicher für die vom Zeitmultiplexsignalempfänger ZMS2 empfangenen Datensignale. Eingeschrieben werden in den Ausgangsspeicher SP4 nur die Datensignale der Kanäle, denen Zeitschlitze im Zeitmultiplexsignal zugeteilt sind. Gelesen werden zyklisch die Inhalte sämtlicher Speicherzellen für die Kanäle K1. Der Ausgangsspeicher SP4 enthält für jeden Kanal K1 eine Speicherzelle.

Ein über den Ausgang D3 abgegebenes Datensignal wird durch den Schreibbefehl am Ausgang S6 und durch die Kanaladresse am Ausgang KA13 in eine Zelle des Ausgangsspeichers SP4 eingeschrieben. Gelesen wird der Inhalt einer Zelle durch einen über den Ausgang L12 abgegebenen Lesebefehl und durch Angabe einer über den Ausgang KA1 des Adressengebers AG abgegebenen Kanaladresse. Der Inhalt der gelesenen Zelle wird über den Ausgang D4 abgegeben.

Das Schaltwerk SW2 liest jeweils den Inhalt der mit einer Kanaladresse angegebenen Speicherzelle des Ausgangsspeichers SP4 und schaltet das in dieser Zelle enthaltene Signal durch auf den betreffenden Kanal. Bei Speicherzellen, die ein Datensignal enthalten, wird das Datensignal durchgeschaltet; bei Speicherzellen, die kein Datensignal enthalten, wird ein Ruhesignal durchgeschaltet.

Der Adressenerkenner E5 erkennt durch Überwachung des vom Zeitmultiplexsignalempfänger ZM2 über den Ausgang D3 abgegebenen Signals und durch Aufnahme der über den Ausgang ZA5 abgegebenen Zeitschlitzadresse, mit welchen Zeitschlitzen eine Kanaladresse empfangen wurde. Der Empfang der Kanaladresse zeigt an, dass der Multiplexer der Gegenstelle M2 diese Zeitschlitze dem betreffenden Kanal zugeteilt hat. Wenn der Adressenerkenner E5 eine Kanaladresse feststellt, dann liest der Adressenerkenner zunächst die zu diesem Kanal gehörende Übertragungsgeschwindigkeit im Geschwindigkeitsspeicher SP2 des Multiplexerteils M11. Dazu gibt der Adressenerkenner E5 über den Ausgang L9 einen Lesebefehl ab und gibt über den Ausgang KA14 die betreffende Kanaladresse ab. Der Geschwindigkeitsspeicher SP2 gibt die Geschwindigkeit über den Ausgang P an den Adressenerkenner E5. Dieser bestimmt aus der Geschwindigkeit die benötigte Ordnung und trägt bei allen Zeitschlitzen der Gruppe in den Zeitschlitzspeicher SP3 die betreffende Kanaladresse und die Information «Quittung senden» ein. Dazu gibt der Adressenerkenner E5 jeweils einen Schreibbefehl an den Ausgang S5, die Zeitschlitzadresse über den Ausgang ZA6 und die Kanaladresse sowie die Information «Quittung senden» über den Ausgang KA15 ab.

Wenn der Adressenerkenner E5 feststellt, dass in dem betreffenden Kanal keine Kanaladressen mehr ankommen, sondern Text eintrifft, dann löscht der Adressenerkenner E5 in den betreffenden Speicherzellen des Zeitschlitzspeichers SP3 die Information «Quittung senden» und trägt die Information «Text senden» ein.

Der Quittungserkenner E4 erkennt durch Überwachung des vom Zeitmultiplexsignalempfänger ZM2 über den Ausgang D3 abgegebenen Signals und der über den Ausgang ZA5 abgegebenen Zeitschlitzadressen mit welchen Zeitschlitzen eine Quittung empfangen wurde. Der Empfang der Quittung zeigt an, dass der Multiplexer M2 der Gegenstelle eine Kanaladresse empfangen hat und für diesen Kanal die gewünschte Zuordnung der Zeitschlitze vorgenommen hat.

Parallel zu der über den Ausgang ZA5 abgegebenen Zeitschlitzadresse erhält der Quittungserkenner E4 über den Ausgang KA5 die unter dieser Zeitschlitzadresse gespeicherte Kanaladresse, so dass der Quittungserkenner E4 weiss, zu welchem Kanal die Quittung gehört.

Der Quittungserkenner E4 liest nun zuerst die Übertragungsgeschwindigkeit — die zu dem adressierten Kanal gehört — im Geschwindigkeitsspeicher SP2. Dazu gibt der Quittungserkenner E4 über den Ausgang L10 einen Lesebefehl und über den Ausgang KA16 die Kanaladresse ab. Der Geschwindigkeitsspeicher SP12 übergibt die Geschwindigkeit über den Ausgang P an den Quittungserkenner E4. Dieser bestimmt aus der Geschwindigkeit die zu dem Kanal gehörende Ordnung und trägt bei allen Zeitschlitzen der Gruppe im Zeitschlitzspeicher SP3 die Information «Text senden» ein. Danach gibt der Quittungserkenner E4 ein Quittungssignal über den Ausgang Q1 an den Multiplexerteil M11 ab.

Der Ruhesignalerkenner E3 erkennt durch Überwachung des vom Zeitmultiplexsignalempfänger ZM2 über den Ausgang D3 abgegebenen Signals und der über den Ausgang ZA5 abgegebenen Zeitschlitzadressen mit welchen Zeitschlitzen ein Ruhesignal empfangen wurde. Der Empfang des Ruhesignals zeigt an, dass im Multiplexer M2 der Gegenstelle diese Zeitschlitze nicht bzw. nicht mehr belegt sind. Parallel zur Zeitschlitzadresse am Ausgang ZA5 erhält der Ruhesignalerkenner E3 über den Ausgang KA5 des Zeitschlitzspeichers SP3 entweder die unter dieser Zeitschlitzadresse gespeicherte Kanaladresse oder die Information «Ruhesignal».

Falls der Ruhesignalerkenner E3 eine Kanaladresse erhält, liest er zuerst die zu der Kanaladresse gehörende Übertragungsgeschwindigkeit im Geschwindigkeitsspeicher SP2. Dazu gibt der Ruhesignalerkenner E3 einen Lesebefehl über den Ausgang L11 und über den Ausgang KA18 die Kanaladresse ab. Der Geschwindigkeitsspeicher SP2 übergibt die Geschwindigkeit über den Ausgang P an den Ruhesignalerkenner E3. Dieser bestimmt aus der Geschwindigkeit die Ordnung und trägt bei allen Zeitschlitzen der Gruppe im Zeitschlitzspeicher SP3 die Information «Ruhesignal» ein. Dazu gibt der Ruhesignalerkenner E3 jeweils einen Schreibbefehl über den Ausgang S7 ab, gibt die Zeitschlitzadresse über den Ausgang ZA8 ab und die Information «Ruhesignal» über den Ausgang KA19. Falls der Ruhesignalerkenner E3 die Information «Ruhesignal» erhält, führt er keine weiteren Aktionen aus.

**Patentansprüche**

1. Verfahren zur Belegung von Zeitschlitzen eines Zeitmultiplexsystems mit dynamischen Multiplexern, das den Anschluss von Datenkanälen in beiden Richtungen ermöglicht, wonach $2^m \cdot n$ Zeitschlitzen des Zeitmultiplexrahmens der Reihe nach die Zahlen 0 bis $-1 + 2^m \cdot n$ zugeordnet werden können, wonach Gruppen der Ordnung i von $2^i$ Zeitschlitzen pro Zeitmultiplexrahmen mit Daten unterschiedlicher Bitrate belegt werden die den Zeitschlitzen einer Gruppe zugeordneten Zahlen sich um Vielfache von n unterscheiden, wobei $i = 0$ oder gleich einer positiven ganzen Zahl ist, und wobei folgende Verfahrensschritte ausgeführt werden:

A. vor Belegung von Zeitschlitzen wird in Abhängigkeit von der gerade vorliegenden Bitrate der zu übertragenden Daten die Ordnung i der benötigten Gruppe von Zeitschlitzen ermittelt;

B. zur Ermittlung freier Zeitschlitze werden in festgelegter Reihenfolge (R) die Zeitschlitzgruppen der Ordnung i innerhalb einer Zeitschlitzgruppe der Ordnung m überprüft, bis eine freie Zeitschlitzgruppe der Ordnung i gefunden ist; gekennzeichnet durch folgende weitere Verfahrensschritte:

C. falls bei der Suche nach freien Zeitschlitzgruppen innerhalb der Ordnung m keine freie Zeitschlitzgruppe der Ordnung i gefunden wurde, wird jeweils innerhalb weiterer Zeitschlitzgruppen der Ordnung m gesucht;

D. jedem Zeitschlitz einer gefundenen freien Gruppe von Zeitschlitzen wird eine Adresse zugeordnet, und diese Zuordnung wird dem Multiplexer der Gegenstelle signalisiert, der seinerseits die entsprechende Zuordnung veranlasst;

E. unabhängig von der Ermittlung einer Gruppe von freien Zeitschlitzen werden entgegengesetzt der festgelegten Reihenfolge (R) belegte Gruppen von Zeitschlitzen gesucht;

F. sobald eine belegte Gruppe von Zeitschlitzen gefunden ist, wird in der festgesetzten Reihenfolge (R) eine neue Gruppe gleicher Ordnung — wie die der belegten — von freien Zeitschlitzen gesucht, die in der festgelegten Reihenfolge (R) vor der gefundenen belegten Gruppe liegen muss;

G. wenn die neue Gruppe von freien Zeitschlitzen gefunden ist, wird diesen Zeitschlitzen die der belegten Gruppe zugeordnete Adresse zugeordnet, und diese Zuordnung wird dem Multiplexer der Gegenstelle signalisiert, der seinerseits eine entsprechende Zuordnung veranlasst;

H. sobald die neue Gruppe von Zeitschlitzen belegt ist, wird die bisher belegte Gruppe von Zeitschlitzen freigegeben.

2. Verfahren nach Anspruch 1, gekennzeichnet durch die folgenden Verfahrensschritte:

K. eine freie Zeitschlitzgruppe der Ordnung i wird, beginnend mit der Zeitschlitzgruppe der Ordnung m mit der Zahl 0 zugeordneten Zeitschlitz Nummer 0 gesucht, wobei mit den Nummern (N0, N1 ... N7) der Zeitschlitzgruppe der Ordnung m die Reihenfolge (R) der Zeitschlitze festgelegt wird und wobei eine Zeitschlitzgruppe der Ordnung $i \geqslant 1$ aus einer Zeitschlitzgruppe der Ordnung $i-1$ und aus jenen Zeitschlitzen besteht, deren Nummern sich durch Addition der Zeitschlitznummern der Ordnung $i-1$ und der Zahl $2^{m-i}$ mal n ergeben;

L. falls bei der Suche nach freien Zeitschlitzen, beginnend mit dem Zeitschlitz Nummer 0 der Zeitschlitzgruppe der Ordnung m keine freie Zeitschlitzgruppe der Ordnung i gefunden wurde, wird jeweils — beginnend mit den den Zahlen 1 bis n−1 zugeordneten Zeitschlitzen — innerhalb der weiteren Zeitschlitzgruppen der Ordnung m gesucht, wobei sich die Nummern der Zeitschlitze der Reihe nach um die Zahlen 1 bis n−1 von den entsprechenden Nummern der Zeitschlitzgruppe der Ordnung m mit dem Zeitschlitz Nummer 0 unterscheiden;

M. die belegten Gruppen von Zeitschlitzen werden — beginnend mit dem letzten Zeitschlitz und entgegengesetzt der festgelegten Reihenfolge — gesucht;

N. sobald eine belegte Gruppe von Zeitschlitzen gefunden ist, wird in der festgelegten Reihenfolge (R) eine neue Gruppe gleicher Ordnung von freien Zeitschlitzen gesucht, die im Hinblick auf die festgelegte Reihenfolge (R) näher an dem Zeitschlitz Nummer 0 gelegen ist als die gefundene belegte Gruppe.

3. Verfahren nach Anspruch 1, dadurch gekennzeichnet, dass sowohl für die Vorwärtsrichtung als auch für die Rückwärtsrichtung die gleiche Adresse den gleichen Zeitschlitzen zugeordnet wird.

4. Verfahren nach Anspruch 2 und 3, dadurch gekennzeichnet, dass bei beiden dynamischen Multiplexern die Zeitschlitze in derselben festgelegten Reihenfolge belegt werden und dass die Zuordnungen bei beiden Multiplexern in gleicher Weise geändert werden.

5. Verfahren nach Anspruch 1, dadurch gekennzeichnet, dass die Teilnehmer, die Daten übertragen wollen, sich beim dynamischen Multiplexer anmelden, dass der dynamische Multiplexer die benötigte Gruppe von Zeitschlitzen sucht, dass nach erfolgter Zuordnung der Adressen zu den Zeitschlitzen der betreffende Teilnehmer eine Sendeerlaubnis erhält und dass der betreffende Teilnehmer — wenn er seine Daten abgesetzt hat — sich beim dynamischen Multiplexer abmeldet, der daraufhin die Zuordnung aufhebt.

**Claims**

1. Method for the allocation of time slots in a t.d.m. system including dynamic multiplexers, which allows data channels to be connected in two directions, in accordance with which $2^m . n$ time slots of the t.d.m. frame can be assigned in turn the numbers 0 to $-1 + 2^m . n$, in accordance with which groups of the classification i of $2^i$ time slots per t.d.m. frame are filled with data having different bit rates and the numbers assigned to the time slots of a group differ from one another by multiples of n, where $i = 0$ or is equal to a positive whole number and where the following method steps are carried out:

A. prior to the allocation of time slots, in dependence upon the presently prevailing bit rate of the data to be transmitted, the classification i of the required group of time slots is determined;

B. in order to determine freee time slots, in a predetermined sequence (R) a check is carried out of the time slot groups of the classification i within a time slot group of the classification m until a free time slot group of the classification i has been found; characterised by the following further method steps:

C. if during the search for free time slot groups within the classification m no free time slot group of the classification i has been found, the search is continued within further time slot groups of the classification m;

D. each time slot within a discovered free group of time slots is assigned an address, and this assignment is signalled to the multiplexer in the opposite station which itself brings about the appropriate assignment;

E. independently of the determination of a group of free time slots, in opposition to the predetermined sequence (R), a search is carried out for allocated groups of time slots;

F. as soon as an allocated group of time slots has been found, in the predetermined sequence (R) a search is carried out for a new group of free time slots of the same classification as that of the allocated group, which must be located in the predetermined sequence (R) preceding the discovered allocated group;

G. when the new group of free time slots has been discovered, these time slots are assigned the address which is assigned to the allocated group, and this assignment is signalled to the multiplexer in the opposite station which itself brings about an appropriate assignment;

H. as soon as the new group of time slots has been allocated, the previously allocated group of time slots is released.

2. Method as claimed in claim 1, characterised by the following method steps:

K. a search is carried out for a free time slot group of the classification i commencing with the time slot group of classification m at time slot number 0 which is assigned to the number 0, where the sequence (R) of the time slots is determined by the numbers (N0, N1 ... N7) of the time slot group of the classification m and where a time slot group of the classification $i \geqslant 1$ consists of a time slot group of the classification $i−1$ and of those time slots whose numbers are produced by the addition of the time slot numbers of the classification $i−1$ and the number $2^{m−1}$ times n;

L. if during the search for free time slots, commencing with time slot number 0 of the time slot group of classification m, no free time slot group of the classification i has been found, then — commencing with the time slots assigned to the numbers 1 to n−1 — a search is continued within the other time slot groups of the classification m, where the numbers of the time slots differ in turn by the numbers 1 to n−1 from the corresponding numbers of the time slot group of the classification m with the time slot number 0;

M. a search is made for the allocated groups of time slots commencing with the last time slot and in opposition to the predetermined sequence;

N. as soon as an allocated group of time slots has been found, a search is made in the predetermined sequence (R) for a new group of the same classification of free time slots which, in relation to the predetermined sequence (R) lies closer to time slot number 0 than the discovered, allocated group.

3. Method as claimed in claim 1, characterised in that both for the forwards direction and for the backwards direction the same address is assigned to the same time slots.

4. Method as claimed in claim 2 and 3, characterised in that in the two dynamic multiplexers the time slots are allocated in the same predetermined sequence, and that the allocations are changed in identical fashion in both of the multiplexers.

5. Method as claimed in claim 1, characterised in that the subscribers which intend to transmit data report to the dynamic multiplexer, that the dynamic multiplexer searches for the required group of time slots, that when the addresses have been assigned to the time slots the subscriber in question receives permission to transmit, and that the subscriber in question — having deposited its data — withdraws from the dynamic multiplexer which subsequently discontinues the assignment.

## Revendications

1. Procédé pour occuper des fentes temporelles d'un système de multiplexage temporel comportant des multiplexeurs dynamiques, qui permet le raccordement de canaux de données dans les deux directions, selon lequel les nombres 0 à $-1 + 2^m \cdot n$ peuvent être associés dans l'ordre à $2^m \cdot n$ fentes temporelles de la trame de multiplexage temporel et selon lequel les groupes de rang i de $2^i$ fentes temporelles pour chaque trame de multiplexage temporel sont occupés par des données possédant des débits binaires différents et les nombres associés aux fentes temporelles d'un groupe se différencient les unes des autres de multiples de n, i étant égal à 0 ou à un nombre entier positif, et les phases opératoires suivantes étant exécutées:

A. Avant l'occupation de fentes temporelles, le rang i du groupe requis de fentes temporelles est déterminé en fonction des débits binaires, précisément présent des données devant être transmises;

B. Pour la détermination de fentes temporelles libres, les groupes de fentes temporelles de rang i à l'intérieur d'un groupe de fentes de temporelles de rang m sont contrôlés, selon la succession (R) déterminée, jusqu'à ce qu'un groupe libre de fentes temporelles de rang i soit trouvé; caractérisé par les autres phases opératoires suivantes:

C. Dans le cas où lors de la recherche de groupes libres de fentes temporelles de rang m, aucun groupe libre de fentes temporelles de rang i n'a été trouvé, une recherche est effectuée respectivement dans d'autres groupes de fentes temporelles de rang m;

D. A chaque fente temporelle d'un groupe libre trouvé de fentes temporelles est associée une adresse et cette association est signalée au multiplexeur du poste opposé, qui, pour sa part, déclenche l'association correspondante;

E. Indépendamment de la détermination d'un groupe de fentes temporelles libres, une recherche de groupes occupés de fentes temporelles est effectuée en sens inverse de la succession (R) fixée;

F. Dès qu'un groupe occupé de fentes temporelles est trouvé, on effectue une recherche, selon la succession (R) fixée, d'un nouveau groupe de même rang — que du groupe occupé — de fentes temporelles libres, qui doit précéder, dans la succession (R) fixée, le groupe occupé trouvé;

G. Lorsque le nouveau groupe de fentes temporelles libres est trouvé, à ses fentes temporelles est associée l'adresse associée au groupe occupé, et cette association est signalée au multiplexeur du poste opposé, qui pour sa part déclence une association correspondante;

H. Dès que les nouveau groupe de fentes temporelles est occupé, le groupe, jusqu'alors occupé, de fentes temporelles est libéré.

2. Procédé selon la revendication 1, caractérisé par les phases opératoires suivantes:

K. Un groupe libre de fentes temporelles de rang i est recherché, en commençant par le groupe de fentes temporelles de rang m contenant la fente temporelle numéro 0, associée au nombre 0, la succession (R) des fentes temporelles étant fixées avec les numéros (N0, N1, ... N7) du groupe de fentes temporelles de rang m et un groupe de fentes temporelles de rang $i \geqslant 1$ étant constitué par un groupe de fentes temporelles de rang $i - 1$ et par les fentes temporelles dont les numéros sont formés par addition des numéros des fentes temporelles de rang $i - 1$ et du nombre $2^{m-1} \cdot n$;

L. Dans le cas où lors de la recherche de fentes temporelles libres, aucun groupe libre de fentes temporelles de rang i n'a été trouvé en commençant par la fente temporelle numéro 0 du groupe de fentes temporelles de rang m, und recherche est effectuée respectivement dans les autres groupes de fentes temporelles de rang m — en commençant par les fentes temporelles associées aux nombres 1 à n−1, les numéros des fentes temporelles se différenciant successivement, de nombres de 1 à n−1, par rapport aux nombres correspondants du groupe de fentes temporelles de rang m contenant la fente temporelle numéro 0;

M. Les groupes occupés de fentes temporelles sont recherchés — en commençant par la dernière fente temporelle et en sens inverse de la succession fixée;

N. Dès qu'un groupe occupé de fentes temporelles est trouvé, il se produit, selon la succession (R) fixée, la recherche d'un nouveau groupe de même rang de fentes temporelles libres qui, dans la succession (R) fixée, sont plus rapprochées de la fente temporelle numéro 0 que le groupe occupé trouvé.

3. Procédé selon la revendication 1, caractérisé en ce que la même adresse est associée aux mêmes fentes temporelles aussi bien pour la direction aller que pour la direction retour.

4. Procédé selon la revendication 2 et 3, caractérisé en ce que dans les deux multiplexeurs dynamiques, les fentes temporelles sont occupées selon la même succession fixée et que les associations dans les deux multiplexeurs sont modifiées de la même façon.

5. Procédé selon la revendication 1, caractérisé en ce que les abonnés, qui veulent transmettre des données, signalent leur demande de communication dans le multiplexeur dynamique, que le multiplexeur dynamique recherche le groupe requis de fentes temporelles, qu'une fois réalisée l'association des adresses aux fentes temporelles, l'abonné considéré reçoit une autorisation d'émission et que, lorsqu'il a envoyé ses données, l'abonné concerné signale sa demande d'interruption de communication dans le multiplexeur dynamique qui supprime alors l'association.

# FIG 1

FIG 2

FIG 3

FIG 4